# EUROPÄISCHE PATENTANMELDUNG

(11) **EP 2 285 100 A2**
(43) Veröffentlichungstag der Anmeldung: **16.02.2011**
(21) Anmeldenummer: 09168404.3
(22) Anmeldetag: 21.08.2009
(51) Int. Cl.: H04N 5/44

(54) **Audio- und/oder Videoempfangsgerät mit Anzeige von Verwaltungsdaten**

(30) Priorität: 08.07.2009 DE 102009026137
(71) Anmelder: Loewe Opta GmbH, 96317 Kronach (DE)
(72) Erfinder: Schaas, Gerhard, 96472 Rödental (DE)
(74) Vertreter: Kinnstätter, Klaus

(57) **Zusammenfassung**

Ein Audio- und/oder Videoempfangsgerät (1) empfängt einen digitalen Strom von AV-Daten und den AV-Daten zugeordnete Verwaltungsdaten (VD). In dem Fall, dass dem Audio- und/oder Videoempfangsgerät (1) von einem Benutzer (4) des Audio- und/oder Videoempfangsgeräts (1) ein Aufzeichnungsbefehl für den empfangenen Strom von AV-Daten vorliegt, zeichnet das Audio- und/oder Videoempfangsgerät (1) den empfangenen Strom von AV-Daten und die zugeordneten Verwaltungsdaten (VD) unter Berücksichtigung von durch die Verwaltungsdaten (VD) definierten Restriktionen auf. Weiterhin verwaltet das Audio- und/oder Videoempfangsgerät (1) die aufgezeichneten Daten unter Berücksichtigung der mit aufgezeichneten Verwaltungsdaten (VD). In mindestens einem Betriebszustand gibt das Audio- und/oder Videoempfangsgerät (1) die empfangenen Verwaltungsdaten (VD) und/oder die aufgezeichneten Verwaltungsdaten (VD) und/oder in Einträgen (E') eines elektronischen Programmführers (EPG) über den empfangenen Strom von AV-Daten und/oder den aufgezeichneten Strom von AV-Daten enthaltene, mit den empfangenen und/oder aufgezeichneten Verwaltungsdaten (VD) korrespondierende Verwaltungsinformationen (VI) an den Benutzer (4) aus.

## Beschreibung

Die vorliegende Erfindung betrifft ein Betriebsverfahren für ein Audio- und/oder Videoempfangsgerät mit den im Oberbegriff des Anspruches 1 angegebenen Merkmalen.

Aus der CI Plus Specification, V1.2 vom April 2009, herausgegeben von der CI Plus LLP, The Billings, Guildford, Surrey, GU1 4YD, UK, ist bekannt, einem Strom von AV-Daten Verwaltungsdaten zuzuordnen. Die Verwaltungsdaten können Restriktionen bezüglich der Zulässigkeit bzw. Unzulässigkeit von Aufnahme- und Kopiervorgängen, der Zulässigkeit bzw. Unzulässigkeit der weiteren Verteilung und der Aufbewahrungsdauer von aufgezeichneten AV-Daten umfassen. Auch andere Verwaltungsdaten sind vorgesehen bzw. können in die Spezifikationen aufgenommen werden.

Ein Audio- und/oder Videoempfangsgerät, das gemäß der CI Plus Spezifikation ausgelegt ist, berücksichtigt beim Aufzeichnen und beim Verwalten der AV-Daten die Verwaltungsdaten. Beispielsweise wird ein Kopieren unterdrückt, wenn es nicht zugelassen ist. In analoger Weise kann auch ein Aufzeichnungsvorgang unterdrückt werden oder ein aufgezeichneter Strom von AV-Daten bei Ablauf seiner zulässigen Aufbewahrungsdauer automatisch gelöscht werden. Es sind ferner Tendenzen erkennbar, dieses Rechtesystem auch auf den Ton-Rundfunk und derartige Angebote über das Internet sowie auf Aufzeichnungsträger, wie DVD, zu übertragen. Die Erfindung schließt alle diese Systeme ein. Anstelle von AV-Daten können es somit auch keine Audio-Datenströme (A-Daten) sein, denen die Verwaltungsdaten zugeordnet sind.

Die Aufgabe der vorliegenden Erfindung besteht darin, den Bedienungskomfort eines Audio- und/oder Videoempfangsgeräts, das derartige Verwaltungsdaten empfängt, für den Benutzer zu erhöhen.

Die Aufgabe wird durch ein Betriebsverfahren mit den Merkmalen des Anspruchs 1 gelöst. Vorteilhafte Ausgestaltungen des Betriebsverfahrens sind Gegenstand der abhängigen Ansprüche.

Erfindungsgemäß ist vorgesehen, ein gattungsgemäßes Betriebsverfahren derart auszugestalten, dass das Audio- und/oder Videoempfangsgerät in mindestens einem Betriebszustand die empfangenen Verwaltungsdaten und/oder die aufgezeichneten Verwaltungsdaten und/oder in einem Eintrag eines elektronischen Programmführers über den empfangenen Strom von AV-Daten und/oder den aufgezeichneten Strom von AV-Daten enthaltene, mit den empfangenen und/oder aufgezeichneten Verwaltungsdaten korrespondierende Verwaltungsinformationen auf dem Display anzeigt und/oder über einen Vocoder als synthetische Sprache wahlweise an den Benutzer ausgibt.

Durch die erfindungsgemäße Ausgestaltung wird erreicht, dass der Benutzer über den Inhalt der Verwaltungsdaten wahlweise und/oder programmierungsspezifisch informiert wird. Er weiß also, was auf Grund der Verwaltungsdaten zulässig ist, war oder sein wird und was nicht.

Die Ausgabeeinrichtung, über welche die Ausgabe an den Benutzer erfolgt, kann nach Bedarf gewählt sein. In vielen Fällen wird das Display, über welches der Strom von AV-Daten an den Benutzer ausgegeben wird, als entsprechende Anzeigeeinrichtung genutzt werden (Stichwort: OSD). In diesem Fall kann die Anzeigeeinrichtung alternativ Bestandteil des Audio- und/oder Videoempfangsgeräts sein oder eine hiervon getrennte Einrichtung sein. Alternativ oder zusätzlich zu einem Onscreen-Display ist es möglich, die entsprechenden Informationen über eine eigenständige Anzeigeeinrichtung an den Benutzer auszugeben. In diesem Fall ist die Anzeigeeinrichtung in der Regel Bestandteil des Audio- und/oder Videoempfangsgeräts. Auch ist die akustische Ausgabe alternativ insbesondere für sehbehinderte Menschen oder in einem Kraftfahrzeug von Interesse.

Die Betriebszustände, in denen die Verwaltungsdaten und/oder die Verwaltungsinformationen an den Benutzer ausgegeben werden, können nach Bedarf gewählt sein. Einige Beispiele:

Es ist möglich, dass einer der Betriebszustände, in denen das Audio- und/oder Videoempfangsgerät die empfangenen Verwaltungsdaten und/oder die korrespondierenden Verwaltungsinformationen an den Benutzer ausgibt, der Beginn einer Aufzeichnung des empfangenen Stromes von AV-Daten ist. In diesem Fall wird der Benutzer bei Beginn einer Aufzeichnung auf die entsprechenden Verwaltungsdaten hingewiesen. Beispielsweise können die entsprechenden Daten für einen relativ kurzen Zeitraum (in der Praxis hat sich ein Zeitraum von 3 bis 10 Sekunden als günstig erwiesen) in die wiedergegebenen AV-Daten eingeblendet werden. Bei der Aufzeichnung kann es sich alternativ um eine programmierte Aufzeichnung oder um eine manuell ausgelöste Aufzeichnung handeln.

Ebenfalls ist es möglich, dass einer der Betriebszustände, in denen das Audio- und/oder Videoempfangsgerät die empfangenen Verwaltungsdaten und/oder die korrespondierenden Verwaltungsinformationen an den Benutzer ausgibt, der Beginn einer Ausgabe des empfangenen Stromes von AV-Daten ist. Beispielsweise kann eine analoge Einblendung wie zuvor erwähnt beim Einschalten des Audio- und/oder Videoempfangsgeräts, beim Umschalten von einem Empfangskanal auf einen anderen Empfangskanal und beim Beenden der Wiedergabe eines aufgezeichneten Stromes von AV-Daten erfolgen. Gegebenenfalls kann es auch möglich sein, eine entsprechende Ausgabe vorzunehmen, wenn innerhalb ein- und desselben Empfangskanals ein neuer Strom von AV-Daten beginnt (neuer Programmbeitrag).

Ebenso ist es möglich, dass einer der Betriebszustände, in denen das Audio- und/oder Videoempfangsgerät die aufgezeichneten Verwaltungsdaten und/oder die korrespondierenden Verwaltungsinformationen an den Benutzer ausgibt, das Ende einer Aufzeichnung des empfangenen Stromes von AV-Daten oder der Beginn einer Wiedergabe eines aufgezeichneten Stromes von AV-Daten ist. In diesem Fall erfolgt die entsprechende Ausgabe, wenn der Benutzer einen Ausgabebefehl vorgibt.

Auch ist es möglich, dass der Benutzer einen Abrufbefehl zum Ausgeben der Verwaltungsdaten eines über eine Anzeigeeinrichtung momentan wiedergegebenen Stromes von AV-Daten vorgibt. In diesem Fall reagiert das Audio- und/oder Videoempfangsgerät entsprechend.

Von Bedeutung ist insbesondere ein weiterer Fall. Denn insbesondere kann es vorkommen, dass auf Grund der durch die Verwaltungsdaten definierten Restriktionen in Bezug auf den zugeordneten Strom von AV-Daten mindestens eine Funktionalität des Audio- und/oder Videoempfangsgeräts gesperrt ist. In diesem Fall ist bevorzugt, dass das Audio- und/oder Videoempfangsgerät die Verwaltungsdaten und/oder die korrespondierenden Verwaltungsinformationen insbesondere dann an den Benutzer ausgibt, wenn der Benutzer einen Aufrufbefehl für die gesperrte Funktionalität des Audio- und/oder Videoempfangsgeräts vorgibt.

In dem Fall, dass die gesperrte Funktionalität ein Aufzeichnungsvorgang für den zugeordneten Strom von AV-Daten ist, ist weiterhin von Vorteil, dass das Audio- und/oder Videoempfangsgerät trotz der Sperrung die zugeordneten Verwaltungsdaten und Identifikationsdaten für den aufzuzeichnenden Strom von AV-Daten und/oder anstelle des aufzuzeichnenden Stromes von AV-Daten eine Hinweismeldung auf die Sperrung aufzeichnet. Durch diese Vorgehensweise kann erreicht werden, dass der Benutzer beispielsweise in einem Fall, bei welcher er während der von ihm gewünschten Aufzeichnung nicht anwesend ist, nachträglich auf den Grund hingewiesen wird, aus dem die Aufzeichnung fehlgeschlagen ist.

Wie bereits erwähnt, können die Verwaltungsdaten ein Zeitlimit für die Aufzeichnungen definieren. Als mögliche Reaktionen nach Ablauf des Zeitlimits kommen ein Blockieren der Wiedergabe und ein automatisches Löschen in Frage. In dem Fall, dass das Audio- und/oder Videoempfangsgerät bei Erreichen des Zeitlimits den zugeordneten Strom von AV-Daten automatisch löscht, stellt es einen wesentlichen Vorteil dar, wenn das Audio- und/oder Videoempfangsgerät auch nach dem Löschen des zugeordneten Stromes von AV-Daten die Aufzeichnung der zugeordneten Verwaltungsdaten und von Identifikationsdaten für den gelöschten Strom von AV-Daten beibehält. Alternativ oder zusätzlich kann das Audio- und/oder Videoempfangsgerät eine Hinweismeldung auf die Löschung generieren.

Auch können die Verwaltungsdaten die maximale Wiedergabedauer eines Programmbeitrags, der empfangen und aufgezeichnet worden ist, bestimmen. Dies hat besondere Bedeutung für Geräte, die eine Festplatte aufweisen, beispielsweise Fernsehempfangsgeräte mit einer Festplatte, um von dem normalen Empfangsbetrieb auf den Speicherbetrieb umschalten zu können, wenn beispielsweise ein Besucher kommt und mit diesem ein Gespräch geführt wird, um später an der Stelle, an der die Aufzeichnung begonnen hat, das Programm weiterbetrachten zu können. Der gesamte Programmbeitrag wird dabei auf die Festplatte gespeichert und kann zeitversetzt vom Benutzer vollständig betrachtet werden. Wenn dabei ein Zeitfenster von beispielsweise 90 Minuten festgelegt wird, in welchem das Programm betrachtet werden kann, so sollte der Benutzer auch hierüber die Information erhalten, damit er weiß, dass es sich hier nicht um eine Daueraufzeichnung, sondern nur um eine vorübergehende Aufzeichnung handelt, die automatisch gelöscht wird, wenn die 90 Minuten abgelaufen sind.

Die Einblendung der Information in das Display kann beispielsweise bei der Wiedergabe selbst erfolgen oder auch bereits beim Betätigen des Aufnahmeknopfes. Wenn darüber hinaus die Verwaltungsdaten angeben, dass die Wiedergabe nur innerhalb eines Zeitfensters von beispielsweise 90 Minuten nach dem Abschluss des Empfangs des Programms möglich ist, so sollte auch hierüber der Benutzer informiert werden, damit er anstelle eines anderen Programms sich das gewünschte, für die Aufzeichnung vorgesehene Programm anschauen kann. Hier ist es sogar möglich, bei Empfang eines anderen Programmbeitrages den Hinweis eingeblendet zu erhalten, dass auf der Festplatte ein Programm gespeichert ist, das nur 90 Minuten lang angesehen werden kann. Dies gilt gleichermaßen aber auch für solche Programme, die parallel aufgezeichnet werden, wenn der Benutzer sich einen anderen Programmbeitrag anschaut.

Die Festplatte ist hier als Synonym für alle Speichermedien genannt. Es können also auch Festspeicher verschiedener Ausführung zum Einsatz kommen. Das klassische Videobandgerät oder Tonaufzeichnungsgerät ist ebenfalls nicht auszuschließen. Der Hinweis auf derartige Rechte kann selbstverständlich auch in eine EPG-Übersicht mit aufgenommen werden bzw. kann solche Rechte als Suchkriterium für EPG-Daten verwendet werden. Wenn das Suchkriterium beispielsweise lautet "90 Minuten Aufzeichnungen", erhält der Benutzer dann in einer EGP-Übersicht beispielsweise alle Beiträge angezeigt, die er an einem Tag, in einer Woche oder in einem anderen ausgewählten Zeitraum empfangen kann, die diesen Bedingungen unterliegen. Er hat also die Möglichkeit, entweder bewusst eine solche Aufzeichnung vorzuprogrammieren oder er kann es von vorneherein ablehnen, solche Beiträge aufzuzeichnen. Auch hier kann durch entsprechende Steuerung bewirkt werden, dass eine Sperrung solcher Aufzeichnungen möglich ist. Einen solchen Bedienungskomfort kann man selbstverständlich auch wieder auflösen, indem ein entsprechender Steuerbefehl über eine Tastatur oder durch Cursorführung aus einem Auswahlmenü, das parallel angezeigt wird, ausgewählt wird. Auch kann während des Abspielens eines Beitrags während einer befristeten Wiedergabe die Restzeit angezeigt werden. Auch kann das Gerät die automatische Abschaltung durch das Rechtemanagement unterbinden, wenn die Restzeit z. B. nur noch 10 Minuten beträgt, so dass der gesamte Beitrag gesehen und gekürzt werden kann.

Das Audio- und/oder Videoempfangsgerät empfängt in der Regel zusätzlich zu den AV-Daten und den zugeordneten Verwaltungsdaten auch Einträge eines elektronischen Programmführers über gegenwärtig und/oder zukünftig empfangbare Ströme von AV-Daten. Es ist möglich, dass die Einträge auch Verwaltungsinformationen über die erwarteten Verwaltungsdaten der gegenwärtig und/oder zukünftig empfangbaren Ströme von AV-Daten umfassen. In diesem Fall ist in einer bevorzugten Ausgestaltung der vorliegenden Erfindung vorgesehen, dass das Audio- und/oder Videoempfangsgerät die Verwaltungsinformationen gegenwärtig und/oder zukünftig empfangbarer Ströme von AV-Daten in mindestens einem Betriebszustand an den Benutzer ausgibt.

Auch hier kann der Betriebszustand, in dem die Ausgabe erfolgt, nach Bedarf gewählt sein. Beispielsweise ist es möglich, dass einer der Betriebszustände, in denen das Audio- und/oder Videoempfangsgerät die Verwaltungsinformationen gegenwärtig und/oder zukünftig empfangbarer Ströme von AV-Daten an den Benutzer ausgibt, das Vorgeben einer Aufzeichnungsanweisung für einen der gegenwärtig und/oder zukünftig empfangbaren Ströme von AV-Daten durch den Benutzer ist.

Es ist möglich, dass die Aufzeichnungsanweisung eine Aufzeichnungsanweisung ist, bei der - beispielsweise aus einem elektronischen Programmführer heraus - gezielt ein ganz bestimmter Programmbeitrag selektiert wird. Es ist jedoch ebenso möglich, dass dem Audio- und/oder Videoempfangsgerät im Rahmen der Aufzeichnungsanweisung vom Benutzer nur Identifikationsdaten für einen Empfangskanal, eine gewünschte Anfangszeit und eine gewünschte Endezeit der Aufzeichnung vorgegeben werden. Auch in einem derartigen Fall kann die entsprechende Ausgabe der Verwaltungsinformationen an den Benutzer erfolgen.

Weiterhin ist es möglich, dass einer der Betriebszustände, in denen das Audio- und/oder Videoempfangsgerät die Verwaltungsinformationen gegenwärtig und/oder zukünftig empfangbarer Ströme von AV-Daten an den Benutzer ausgibt, eine Übersichtsdarstellung ist, in der das Audio- und/oder Videoempfangsgerät simultan Programminformationsdaten über mehrere gegenwärtig und/oder zukünftig empfangbare Ströme von AV-Daten an den Benutzer ausgibt.

Beispielsweise ist es möglich, die entsprechenden Informationen stets mit auszugeben. Alternativ ist es möglich, sie erst auf Grund eines entsprechenden Befehls des Benutzers gezielt abzurufen. Es ist auch möglich, dass vom Benutzer einstellbar ist, ob die Verwaltungsinformationen automatisch mit angezeigt werden oder von ihm abgerufen werden müssen.

Ebenso ist es möglich, dass einer der Betriebszustände, in denen das Audio- und/oder Videoempfangsgerät die Verwaltungsinformationen gegenwärtig und/oder zukünftig empfangbarer Ströme von AV-Daten an den Benutzer ausgibt, eine Einzeldarstellung ist, in der das Audio- und/oder Videoempfangsgerät Programminformationsdaten über einen einzigen gegenwärtig oder zukünftig empfangbaren Strom von AV-Daten an den Benutzer ausgibt. Auch hier ist - analog zur zuletzt beschriebenen Ausgestaltung - alternativ eine automatische Anzeige oder eine Abrufbarkeit durch den Benutzer möglich.

In weiterer Ausgestaltung der Erfindung ist vorgesehen, dass die empfangenen und/oder aufgezeichneten Verwaltungsdaten und/oder damit bereits umgesetzte, korrespondierende Verwaltungsinformationen Such- oder Sortierkriterium für EPG-Daten sind. So kann beispielsweise eingegeben werden, dass alle AV-Daten von für die Aufzeichnung uneingeschränkter Programmbeiträge, die ab 20 Uhr bis 21 Uhr empfangbar sind, dargestellt werden. Die EPG-Daten werden dann nach diesem Kriterium gelistet auf dem Display dargestellt oder über den Vocoder ausgegeben, so dass der Benutzer hieraus auswählen kann. Die Auswahl selbst erfolgt entweder in bekannter Weise über eine Cursorführung am Display oder durch Spracheingabe an das Gerät, wenn dieses eine entsprechende Software zur Ansteuerung durch Spracheingabe enthält. Diese Sortierfunktion hat den Vorteil, dass der Benutzer tatsächlich aus den beispielsweise aufzeichnungsfähigen AV-Daten sofort auswählen kann und nicht erst eine Einzelprüfung vornehmen muss.

Des Weiteren bietet die Erfindung den Vorteil, dass beispielsweise mitgeteilt wird, dass bei Eingabe der Selektion "jugendgefährdender Filme" ein Befehl mittels Fernbedienung oder Ortsbedienung am Gerät angegeben werden kann, dass diese nicht dargestellt werden sollen. Es kann hier also auf einfache Weise eine Kindersicherung ebenfalls realisiert werden. Die Erfindung bietet also ein umfassendes Rechtemanagement im Empfangsgerät selbst an.

Zur Realisierung kann eine Betriebssoftware derart ausgebildet sein, dass das Abarbeiten des Maschinencodes der Betriebssoftware durch das Audio- und/oder Videoempfangsgerät bewirkt, dass das Audio- und/oder Videoempfangsgerät ein erfindungsgemäßes Betriebsverfahren ausführt. Die Betriebssoftware kann insbesondere auf einem Datenträger in maschinenlesbarer Form (insbesondere in ausschließlich maschinenlesbarer Form, beispielsweise in elektronischer Form) gespeichert sein.

Mit der Betriebssoftware ist das Gerät entsprechend zu programmieren.

Weitere Vorteile und Einzelheiten ergeben sich aus der nachfolgenden Beschreibung eines Ausführungsbeispiels in Verbindung mit den Zeichnungen. Es zeigen in Prinzipdarstellung
- Figur 1: ein Übersichtsbild,
- Figur 2: einen möglichen Aufbau eines Stromes von Daten,
- Figur 3: einen möglichen Aufbau eines elektro- nischen Programmführers und
- Figuren 4 und 5: Ablaufdiagramme und
- Figuren 6A bis 6C: Ablaufdiagramme.

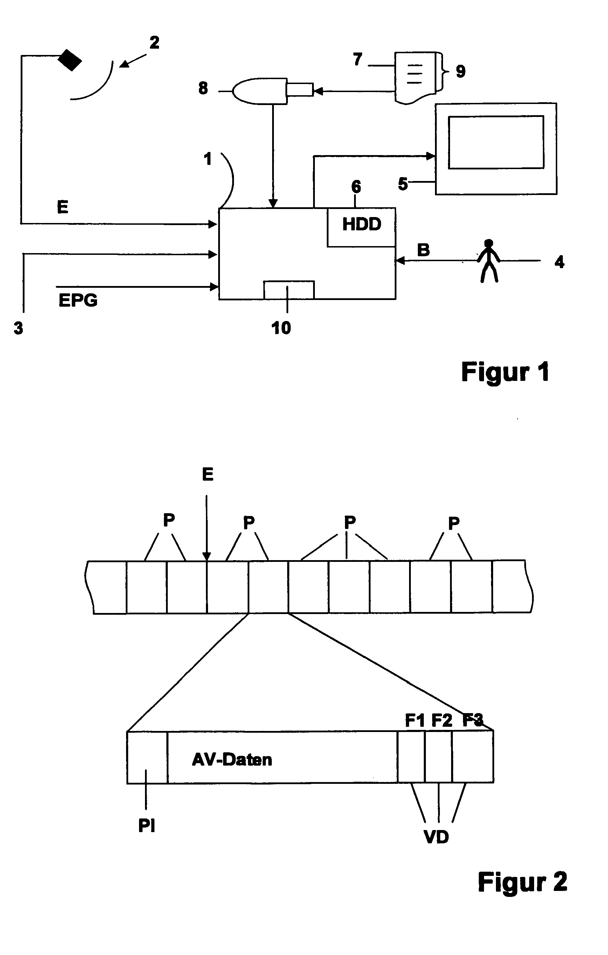

Gemäß Figur 1 wird einem Audio- und/oder Videoempfangsgerät 1 ein Empfangssignal E zugeführt. Das Empfangssignal E kann dem Audio- und/oder Videoempfangsgerät 1 beispielsweise über eine Parabolantenne 2 zugeführt werden. Alternativ kann das Empfangssignal E dem Audio- und/oder Videoempfangsgerät 1 über einen Kabelanschluss 3 oder eine terrestrische Antenne (nicht dargestellt) zugeführt werden. Weiterhin wird dem Audio- und/oder Videoempfangsgerät 1 in der Regel ein elektronischer Programmführer EPG zugeführt. Das Zuführen des elektronischen Programmführers EPG zum Audio- und/oder Videoempfangsgerät 1 kann zusammen mit dem Empfangssignal E oder getrennt davon erfolgen.

Das Empfangssignal E entspricht mindestens einem Empfangskanal. Es umfasst gemäß Figur 2 eine Mehrzahl von digitalen Datenpaketen P. Jedes Datenpaket P weist einen Paketidentifizierer PI auf. Datenpakete P, die denselben Paketidentifizierer PI aufweisen, bilden jeweils einen digitalen Strom von AV-Daten (AV = Audio-Video). Jedem Strom von AV-Daten sind weiterhin Verwaltungsdaten VD zugeordnet.

Die Verwaltungsdaten VD können gemäß Figur 2 Rechte festlegen, die dem Strom von AV-Daten zugeordnet sind. So kann beispielsweise in einem Feld F1 festgelegt sein, ob der zugeordnete Strom von AV-Daten aufgezeichnet werden darf oder nicht und ob und gegebenenfalls welchen Beschränkungen der zugeordnete Strom von AV-Daten beim Kopieren unterliegt. In einem Feld F2 kann festgelegt sein, wie lange eine Aufzeichnung des Stromes von AV-Daten gespeichert werden darf, beispielsweise unbegrenzt, ab Übertragung für drei Monate, für einen Monat, für eine Woche usw.. In einem Feld F3 können weitere Verwaltungsdaten enthalten sein. Diese Daten können - rein beispielhaft - festlegen, ob und gegebenenfalls in welchem Umfang der Strom von AV-Daten manipuliert werden darf. Beispielsweise kann das Herausschneiden von Szenen beim Bearbeiten des aufgezeichneten Stromes von AV-Daten untersagt sein. Alternativ oder zusätzlich kann das Überspringen von Szenen bei der Wiedergabe des aufgezeichneten Stromes von AV-Daten untersagt sein.

Die Verwaltungsdaten VD sind Steuerdaten, die vom Audio- und/oder Videoempfangsgerät 1 im Betrieb ausgewertet und entsprechend berücksichtigt werden.

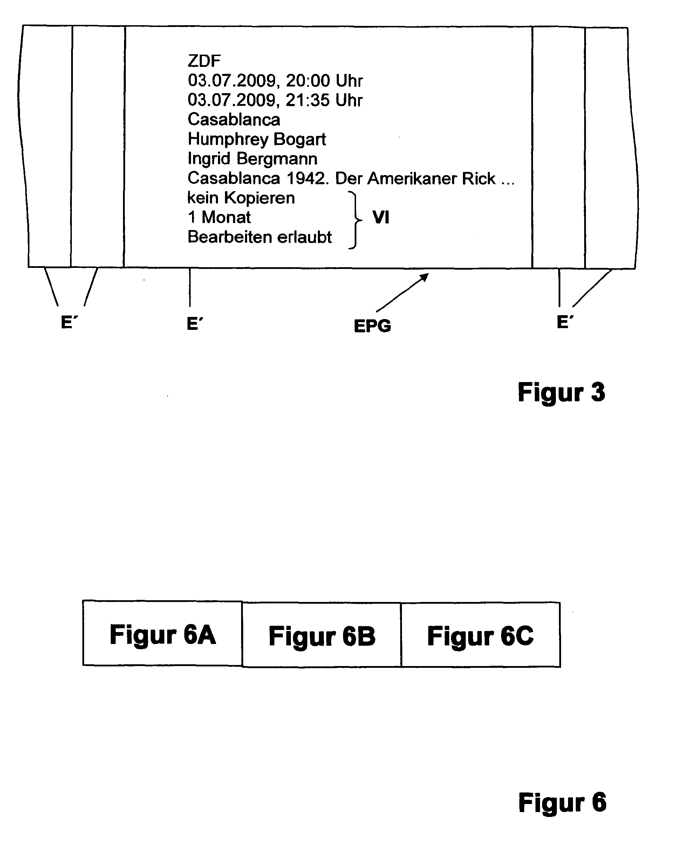

Der elektronische Programmführer EPG umfasst gemäß Figur 3 eine Vielzahl von Einträgen E'. Jeder Eintrag E' steht für einen bestimmten Programmbeitrag, der zu einem bestimmten Zeitraum über einen bestimmten Empfangskanal übertragen wird. Rein beispielhaft ist in Figur 3 einer der Einträge E' dargestellt. Rein beispielhaft ist in Figur 3 für einen bestimmten Programmbeitrag angegeben:
- der Empfangskanal = ZDF (= Zweites Deutsches Fernsehen)
- der Startzeitpunkt = 03.07.2009, 20.00 Uhr,
- der Endezeitpunkt = 03.07.2009, 21.35 Uhr,
- der Titel = "Casablanca",
- weitere Informationen über den Programmbeitrag, beispielsweise über die Hauptdarsteller und die Handlung, sowie
- Verwaltungsinformationen VI.

Die Verwaltungsinformationen VI sind Informationen über die Verwaltungsdaten VD. Sie korrespondieren inhaltlich mit den Verwaltungsdaten VD. Der Unterschied zwischen den Verwaltungsinformationen VI und den Verwaltungsdaten VD besteht darin, dass die Verwaltungsinformationen VI Klartext sind, der zum Ausgeben an einen Benutzer 4 des Audio- und/oder Videoempfangsgeräts 1 bestimmt ist. Beispielsweise kann es sich bei den Verwaltungsinformationen VI zu diesem Zweck um ASCII-Code handeln oder um Code, der in ASCII-Zeichen umgesetzt wird. Die Verwaltungsdaten VD hingegen sind Steuerdaten, die für die Verwertung durch das Audio- und/oder Videoempfangsgerät 1 bestimmt sind. Es kann jedoch möglich sein, anhand der Verwaltungsinformationen VI die Verwaltungsdaten VD zu ermitteln bzw. umgekehrt anhand der Verwaltungsdaten VD die Verwaltungsinformationen VI zu ermitteln.

Das Audio- und/oder Videoempfangsgerät 1 nimmt - in der Regel über eine Fernbedienung - vom Benutzer 4 Steuerbefehle B entgegen. Beispielsweise nimmt das Audio- und/oder Videoempfangsgerät 1 den Befehl entgegen, einem bestimmten Empfangskanal (ARD, ZDF, RTL, ...) zu selektieren. Weiterhin kann das Audio- und/oder Videoempfangsgerät 1 Befehle entgegennehmen, die AV-Daten, die momentan über den selektierten Empfangskanal übertragen werden, unmittelbar auszugeben. In diesem Fall gibt das Audio- und/oder Videoempfangsgerät 1 den empfangenen Strom von AV-Daten direkt über eine Anzeigeeinrichtung 5 an den Benutzer 4 aus. Die Anzeigeeinrichtung 5 ist somit ein übliches Display, auf dem Fernsehbilder dargestellt werden. Die Anzeigeeinrichtung 5 kann Bestandteil des Audio- und/oder Videoempfangsgeräts 1 sein. Beispielsweise kann es sich bei dem Audio- und/oder Videoempfangsgerät 1 um ein Fernsehgerät handeln, das einen integrierten Bildschirm aufweist. Alternativ kann die Anzeigeeinrichtung 5 vom Audio- und/oder Videoempfangsgerät 1 getrennt sein. Beispielsweise kann das Audio- und/oder Videoempfangsgerät 1 ein reiner Sat-Receiver sein, die Anzeigeeinrichtung 5 ein Fernseher, der nur das Video- und Audiosignal wiedergibt, das ihm vom Audio- und/oder Videoempfangsgerät 1 geliefert wird.

Alternativ zu einer direkten Wiedergabe ist es möglich, einen empfangenen Strom von AV-Daten mittels einer Speichereinrichtung 6 aufzuzeichnen. Das Aufzeichnen erfolgt selbstverständlich nur dann, wenn dem Audio- und/oder Videoempfangsgerät 1 vom Benutzer 4 ein entsprechender Aufzeichnungsbefehl vorgegeben wird.

Die Speichereinrichtung 6 ist in der Regel Bestandteil des Audio- und/oder Videoempfangsgeräts 1. Beispielsweise kann das Audio- und/oder Videoempfangsgerät 1 als Sat-Receiver mit integrierter Festplatte ausgebildet sein. Wie obenstehend erwähnt, können die Verwaltungsdaten VD Restriktionen enthalten, dass beispielsweise der empfangene Strom von AV-Daten nicht aufgezeichnet werden darf. Selbstverständlich beachtet das Audio- und/oder Videoempfangsgerät 1 die durch die Verwaltungsdaten VD definierten Restriktionen. Wenn beispielsweise auf Grund der Verwaltungsdaten VD ein Aufzeichnen nicht zulässig ist, wird ein entsprechender Aufzeichnungsbefehl des Benutzers 4 vom Audio- und/oder Videoempfangsgerät 1 ignoriert. Die Vorgabe des Aufzeichnungsbefehls kann alternativ manuell oder über eine Timerprogrammierung erfolgt sein.

Weiterhin zeichnet das Audio- und/oder Videoempfangsgerät 1 nicht nur den empfangenen Strom von AV-Daten auf, sondern auch die zugeordneten Verwaltungsdaten VD. Denn die Verwaltungsdaten VD können beispielsweise auch weitergehende Restriktionen enthalten, siehe die obenstehend erwähnte Aufbewahrungsdauer oder den obenstehend erwähnten Kopierschutz. In diesem Fall verwaltet das Audio- und/oder Videoempfangsgerät 1 die aufgezeichneten Daten (= AV-Daten und Verwaltungsdaten VD) unter Berücksichtigung der mit aufgezeichneten Verwaltungsdaten VD. Beispielsweise kann in Übereinstimmung mit den aufgezeichneten Verwaltungsdaten VD ein Bearbeiten oder Kopieren blockiert werden, eine Wiedergabe nach Ablauf der Aufzeichnungsdauer gesperrt werden oder können die gespeicherten Daten nach Ablauf eines durch die Verwaltungsdaten VD definierten Zeitlimits automatisch gelöscht werden.

Das Audio- und/oder Videoempfangsgerät 1 ist als softwareprogrammierbare Einrichtung ausgebildet. Dies ist in Figur 1 dadurch angedeutet, dass in das Audio- und/oder Videoempfangsgerät 1 das Zeichen "µP" eingeschrieben ist. Innerhalb des Audio- und/oder Videoempfangsgeräts 1 ist daher in einem geeigneten Speicher eine Betriebssoftware 7 hinterlegt. Der Speicher kann beispielsweise als Flash-EPROM ausgebildet sein. Die Betriebssoftware 7 wird vom Audio- und/oder Videoempfangsgerät 1 während des Betriebs des Audio- und/oder Videoempfangsgeräts 1 abgearbeitet.

Die Betriebssoftware 7 ist dem Audio- und/oder Videoempfangsgerät 1 zuvor zugeführt worden. Beispielsweise ist es möglich, das obenstehend erwähnte Flash-EPROM vor dem Einbau in das Audio- und/oder Videoempfangsgerät 1 zu programmieren. Auch andere Möglichkeiten sind gegeben. Beispielsweise ist es möglich, die Betriebssoftware 7 auf einem mobilen Datenträger 8 in maschinenlesbarer Form (beispielsweise in elektronischer Form) zu speichern und die Betriebssoftware 7 dem Audio- und/oder Videoempfangsgerät 1 über den Datenträger 8 zuzuführen. Als Datenträger 8 ist in Figur 1 rein beispielhaft ein USB-Memorystick dargestellt. Es sind jedoch beliebige andere Ausgestaltungen ebenso möglich.

Die Betriebssoftware 7 umfasst Maschinencode 9, mit dem das Audio- und/oder Videoempfangsgerät 1 programmiert ist. Der Maschinencode 9 ist von dem Audio- und/oder Videoempfangsgerät 1 unmittelbar abarbeitbar. Das Abarbeiten des Maschinencodes 9 durch das Audio- und/oder Videoempfangsgerät 1 bewirkt, dass das Audio- und/oder Videoempfangsgerät 1 ein Betriebsverfahren ausführt, das nachfolgend näher erläutert wird. Durch die entsprechende Programmierung des Audio- und/oder Videoempfangsgeräts 1 wird das Audio- und/oder Videoempfangsgerät 1 also erfindungsgemäß ausgebildet.

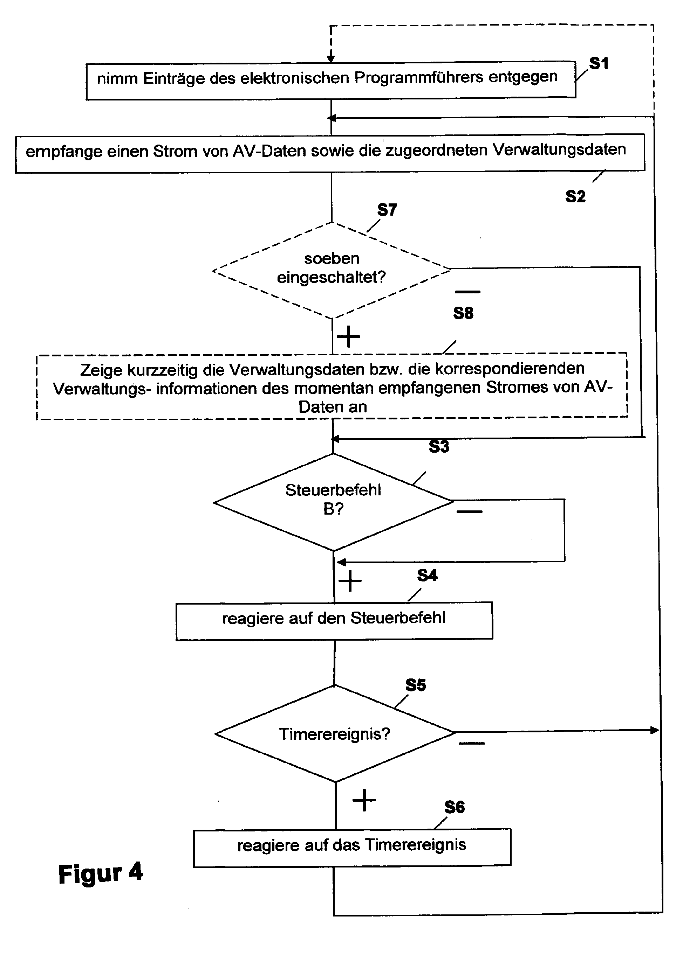

Das Audio- und/oder Videoempfangsgerät 1 führt ein Grundverfahren aus, das in Figur 4 dargestellt ist. Gemäß Figur 4 nimmt das Audio- und/oder Videoempfangsgerät 1 in einem Schritt S1 Einträge E' des elektronischen Programmführers EPG entgegen. In einem Schritt S2 empfängt das Audio- und/oder Videoempfangsgerät 1 einen Strom von AV-Daten sowie die zugeordneten Verwaltungsdaten VD.

In einem Schritt S3 prüft das Audio- und/oder Videoempfangsgerät 1, ob ihm vom Benutzer 4 ein Steuerbefehl B vorgegeben wurde. Wenn dies der Fall ist, reagiert das Audio- und/oder Videoempfangsgerät 1 in einem Schritt S4 entsprechend. Anderenfalls geht das Audio- und/oder Videoempfangsgerät 1 direkt zu einem Schritt S5 über.

Im Schritt S5 prüft das Audio- und/oder Videoempfangsgerät 1, ob ein Timerereignis eingetreten ist. Wenn dies der Fall ist, reagiert das Audio- und/oder Videoempfangsgerät 1 in einem Schritt S6 entsprechend. Anderenfalls geht das Audio- und/oder Videoempfangsgerät 1 zum Schritt S2 zurück.

Es sind Ausgestaltungen denkbar, in denen der elektronische Programmführer EPG kontinuierlich an das Audio- und/oder Videoempfangsgerät 1 übermittelt wird. In diesem Fall geht das Audio- und/oder Videoempfangsgerät 1 nicht zum Schritt S2 zurück, sondern zum Schritt S1. Diese Alternative ist in Figur 1 gestrichelt angedeutet.

Es ist möglich, dass zusätzlich zu den Schritten S1 bis S6 Schritte S7 und S8 vorhanden sind. Auf Grund des Umstands, dass diese beiden Schritte nur optional vorhanden sind, sind sie in Figur 1 gestrichelt dargestellt.

Im Schritt S7 prüft das Audio- und/oder Videoempfangsgerät 1, ob es unmittelbar zuvor eingeschaltet wurde. Nur in diesem Fall wird der Schritt S8 ausgeführt. Im Schritt S8 zeigt das Audio- und/oder Videoempfangsgerät 1 kurzzeitig die Verwaltungsdaten VD bzw. die korrespondierenden Verwaltungsinformationen VI des momentan empfangenen und über die Anzeigeeinrichtung 5 wiedergegebenen Stromes von AV-Daten an.

Die Anzeige erfolgt, wie erwähnt, nur kurzzeitig. Beispielsweise kann für einen Zeitraum von wenigen Sekunden - beispielsweise 3 bis 10 Sekunden - eine entsprechende Einblendung in das über die Anzeigeeinrichtung 5 ausgegebene Bild erfolgen. Alternativ kann eine separate Anzeigeeinrichtung 10 vorhanden ein, die ausschließlich zum Anzeigen von Informationen bestimmt ist, die von den AV-Daten verschieden sind. Die Anzeigeeinrichtung 10 ist, sofern sie vorhanden ist, in der Regel Bestandteil des Audio- und/oder Videoempfangsgeräts 1.

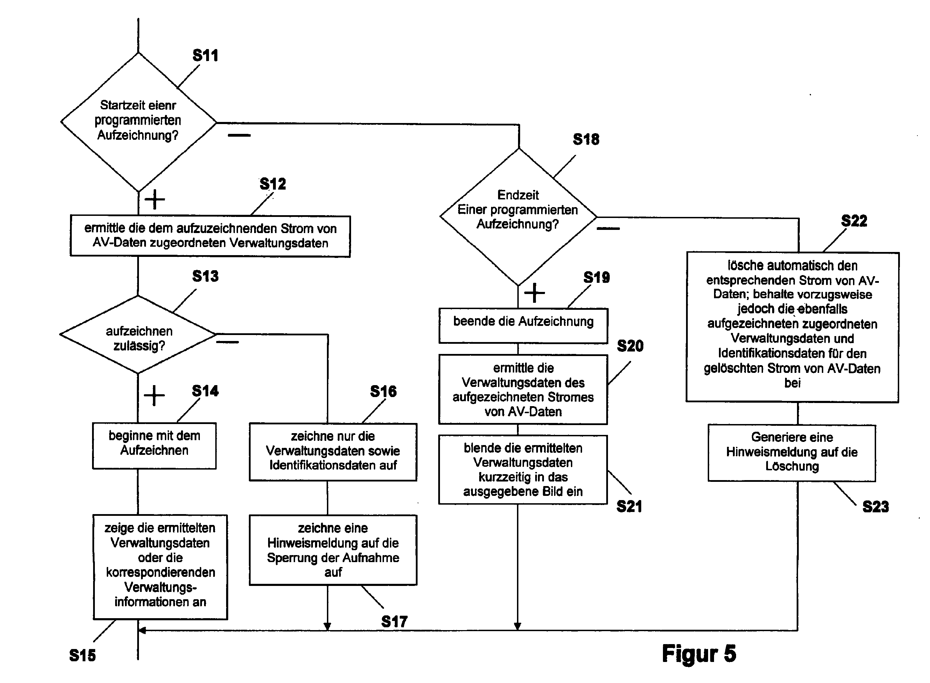

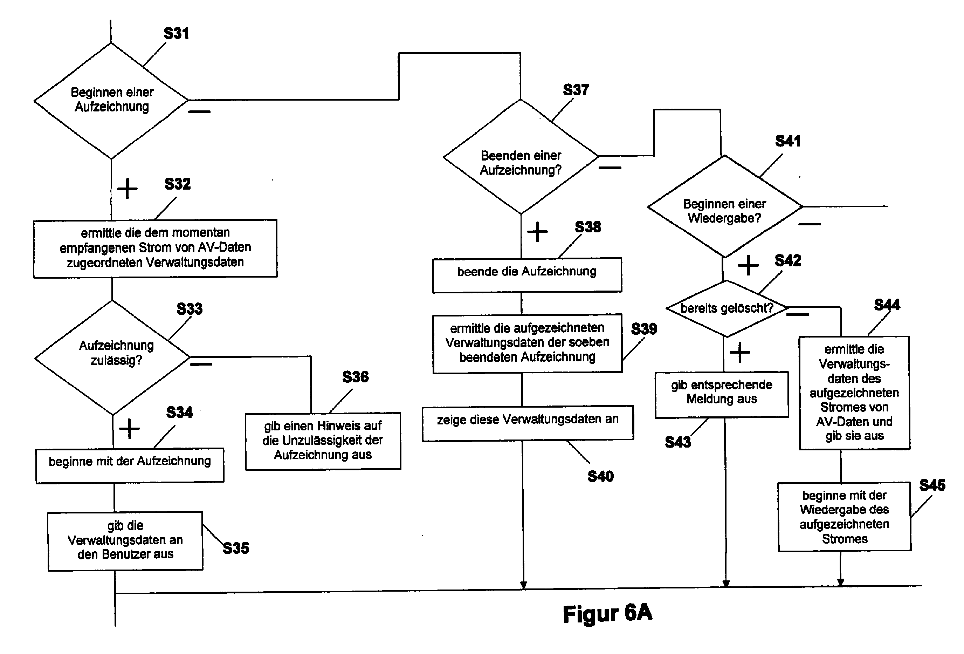

Nachfolgend wird in Verbindung mit Figur 5 zunächst der Schritt S6 von Figur 4 näher erläutert. Sodann wird in Verbindung mit den Figuren 6A bis 6C der Schritt S4 von Figur 4 näher erläutert.

Gemäß Figur 5 prüft das Audio- und/oder Videoempfangsgerät 1 in einem Schritt S11, ob das Timerereignis das Erreichen der Startzeit einer programmierten Aufzeichnung ist. Wenn dies der Fall ist, geht das Audio- und/oder Videoempfangsgerät 1 zu einem Schritt S12 über.

Im Schritt S12 ermittelt das Audio- und/oder Videoempfangsgerät die Verwaltungsdaten VD, welche dem aufzuzeichnenden Strom von AV-Daten zugeordnet sind. Sodann prüft das Audio- und/oder Videoempfangsgerät 1 in einem Schritt S13 anhand der ermittelten Verwaltungsdaten VD, ob das Aufzeichnen zulässig ist. Wenn das Aufzeichnen zulässig ist, führt das Audio- und/oder Videoempfangsgerät 1 einen Schritt S14 aus, in dem sie das Aufzeichnen des aufzuzeichnenden Stromes von AV-Daten beginnt. Im Rahmen des Aufzeichnens werden nicht nur die AV-Daten, sondern auch die zugeordneten Verwaltungsdaten VD mit aufgezeichnet.

In einem Schritt S15 zeigt das Audio- und/oder Videoempfangsgerät 1 die ermittelten Verwaltungsdaten VD oder die korrespondierenden Verwaltungsinformationen VI des aufzuzeichnenden Stromes von AV-Daten an. Beispielsweise kann eine kurzzeitige Einblendung in das Bild erfolgen, das momentan über die Anzeigeeinrichtung 5 an den Benutzer 4 des Audio- und/oder Videoempfangsgeräts 1 ausgegeben wird.

Der Begriff "kurzzeitig" bedeutet in der Regel eine Einblendung von wenigen Sekunden, beispielsweise von 3 bis 10 Sekunden. Alternativ kann die Einblendung aufrecht erhalten bleiben, bis der Benutzer 4 ein entsprechendes Bestätigungskommando eingegeben hat.

Wenn im Schritt S13 entschieden wurde, dass die Aufzeichnung nicht zulässig ist, geht das Audio- und/oder Videoempfangsgerät 1 zu einem Schritt S16 über. Im Schritt S16 werden trotz der Sperrung der Aufzeichnung der AV-Daten die Verwaltungsdaten VD des aufzuzeichnenden Stromes von AV-Daten sowie Identifikationsdaten für den aufzuzeichnenden Strom von AV-Daten (beispielsweise der Paketidentifizierer PI) aufgezeichnet. Alternativ oder zusätzlich kann ein Schritt S17 ausgeführt werden. Im Schritt S17 zeichnet das Audio- und/oder Videoempfangsgerät 1 eine Hinweismeldung auf die Sperrung der Aufzeichnung auf. Analoge Vorgehensweisen - das heißt das Anzeigen der Veraltungsdaten VD, der Verwaltungsinformationen VI oder einer entsprechenden Hinweismeldung - sind auch beim Anfordern anderer auf Grund der Verwaltungsdaten VD gesperrter Funktionalitäten möglich.

Wenn das Timerereignis nicht das Erreichen der Startzeit einer programmierten Aufzeichnung ist, wird vom Schritt S11 zu einem Schritt S18 übergegangen. Im Schritt S18 prüft das Audio- und/oder Videoempfangsgerät 1, ob die Endezeit einer programmierten Aufzeichnung erreicht ist. Wenn dies der Fall ist, beendet das Audio- und/oder Videoempfangsgerät 1 in einem Schritt S19 die Aufzeichnung. Es ist möglich, nach dem Schritt S19 Schritte S20 und S21 vorzusehen. Im Schritt S20 ermittelt das Audio- und/oder Videoempfangsgerät 1 die Verwaltungsdaten VD des aufgezeichneten Stromes von AV-Daten. Im Schritt S21 erfolgt eine kurzzeitige Einblendung der ermittelten Verwaltungsdaten VD in das vom Audio- und/oder Videoempfangsgerät 1 an die Anzeigeeinrichtung 5 ausgegebene Bild.

Das Vorhandensein der Schritte S12, S13, S20 und S21 ist nicht in jedem Fall sinnvoll. Nicht sinnvoll ist das Vorhandensein der genannten Schritte beispielsweise, wenn das Audio- und/oder Videoempfangsgerät 1 nur eine Aufzeichnung vornimmt, nicht aber gleichzeitig ein Bild an die Anzeigeeinrichtung 5 ausgibt. Sinnvoll sind die genannten Schritte, wenn eine derartige Ausgabe erfolgt, sei es, dass (rein zufällig) derselbe Empfangskanal live über die Anzeigeeinrichtung 5 angezeigt wird, sei es, dass ein anderer Empfangskanal live über die Anzeigeeinrichtung 5 angezeigt wird, sei es, dass eine Wiedergabe eines anderen, bereits aufgezeichneten Stromes von AV-Daten erfolgt oder eine zeitversetzte Ausgabe des momentan aufgezeichneten Stromes von AV-Daten erfolgt.

Aus den obenstehenden Ausführungen ist ersichtlich, dass es geschehen kann, dass auf Grund der durch die Verwaltungsdaten VD definierten Restriktionen in Bezug auf den zugeordneten Strom von AV-Daten (mindestens) eine Funktionalität des Audio- und/oder Videoempfangsgeräts 1 gesperrt ist, nämlich in dem angeführten Beispiel die Möglichkeit, einen Strom von AV-Daten aufzuzeichnen. Die gesperrte Funktionalität ist gemäß dem Beispiel von Figur 5 also ein Aufzeichnungsvorgang für den zugeordneten Strom von AV-Daten. Insbesondere in dem Fall, dass dem Audio- und/oder Videoempfangsgerät 1 ein Steuerbefehl B vorgegeben wird, mittels dessen (direkt oder indirekt) in Bezug auf den zugeordneten Strom von AV-Daten die gesperrte Funktionalität aufgerufen (= angefordert) wird, werden weiterhin gemäß dem Schritt S15, der auch im Nein-Zweig des Schrittes S13 ausgeführt wird, die Verwaltungsdaten VD (alternativ die korrespondierenden Verwaltungsinformationen VI) an den Benutzer 4 ausgegeben.

Falls im Schritt S18 auch nicht festgestellt wurde, dass die Endezeit einer programmierten Aufzeichnung erreicht ist, kann das eingetretene Timerereignis nur noch der Ablauf eines Zeitlimits für eine bereits erfolgte Aufzeichnung eines Stromes von AV-Daten sein. Das Zeitlimit wird vom Audio- und/oder Videoempfangsgerät 1 anhand der dem betreffenden Strom von AV-Daten zugeordneten Verwaltungsdaten VD ermittelt.

Wenn das Zeitlimit erreicht wird, kann ein Schritt S22 ausgeführt werden. Im Schritt S22 löscht das Audio- und/oder Videoempfangsgerät 1 automatisch den entsprechenden Strom von AV-Daten.

Es ist möglich, im Rahmen des Schrittes S22 eine vollständige Löschung vorzunehmen. Vorzugsweise werden entsprechend Figur 5 im Rahmen des Schrittes S22 jedoch auch nach dem Löschen des Stromes von AV-Daten die ebenfalls aufgezeichneten zugeordneten Verwaltungsdaten VD und Identifikationsdaten für den gelöschten Strom von AV-Daten (beispielsweise dessen Paketidentifizierer PI) beibehalten. Dadurch ist es für den Benutzer 4 auch nach dem Löschen des Stromes von AV-Daten möglich, zu erfahren, warum ihm der bereits aufgezeichnete Strom von AV-Daten nicht mehr zur Verfügung steht.

Alternativ oder zusätzlich zum Beibehalten der zugeordneten Verwaltungsdaten VD und der Identifikationsdaten ist es möglich, dass das Audio- und/oder Videoempfangsgerät 1 in einem Schritt S23 eine Hinweismeldung auf die Löschung generiert. Auch dadurch kann der Benutzer 4 darüber informiert werden, dass und warum der Strom von AV-Daten gelöscht wurde. Die Vorgehensweise gemäß den Schritten S22 und S23 ist insbesondere eine mögliche Art und Weise, die aufgezeichneten Daten unter Berücksichtigung der mit aufgezeichneten Verwaltungsdaten VD zu verwalten.

Die Figuren 6A bis 6C zeigen bezüglich eines Teils der möglichen Steuerbefehle B, wie bei Vorgabe dieser Steuerbefehle B vom Audio- und/oder Videoempfangsgerät 1 vorgegangen wird.

In einem Schritt S31 - siehe Figur 6A - prüft das Audio- und/oder Videoempfangsgerät 1, ob der eingegebene Steuerbefehl B ein Befehl zum Beginnen einer (manuell ausgelösten) Aufzeichnung ist. Wenn dies der Fall ist, wird mit einem Schritt S32 fortgefahren.

Im Schritt S32 ermittelt das Audio- und/oder Videoempfangsgerät 1 die Verwaltungsdaten VD, die dem momentan empfangenen Strom von AV-Daten zugeordnet sind. In einem Schritt S33 prüft das Audio- und/oder Videoempfangsgerät 1 anhand der ermittelten Verwaltungsdaten VD, ob die Aufzeichnung zulässig ist.

Wenn die Aufzeichnung zulässig ist, beginnt das Audio- und/oder Videoempfangsgerät 1 in einem Schritt S34 mit der Aufzeichnung. Weiterhin gibt das Audio- und/oder Videoempfangsgerät 1 in einem Schritt S35 die Verwaltungsdaten VD bzw. die korrespondierenden Verwaltungsinformationen VI an den Benutzer 4 aus. Beispielsweise kann kurzzeitig (d. h. für wenige Sekunden oder bis zur Eingabe eines Bestätigungsbefehls durch den Benutzer 4) eine Einblendung in das über die Anzeigeeinrichtung 5 ausgegebene Bild erfolgen.

Wenn die Aufzeichnung nicht zulässig ist, erfolgt in einem Schritt S36 das Ausgeben eines entsprechenden Hinweises. Der Hinweis ist (selbstverständlich) in Abhängigkeit von den Verwaltungsdaten VD oder den korrespondierenden Verwaltungsinformationen VI ermittelt worden. Der Schritt S36 kann inhaltlich den Schritt S35 mit umfassen.

Wenn im Schritt S31 festgestellt wurde, dass der eingegebene Steuerbefehl B nicht ein Befehl zum Beginnen einer Aufzeichnung ist, prüft das Audio- und/oder Videoempfangsgerät 1 in einem Schritt S37, ob der eingegebene Steuerbefehl B ein Befehl zum Beenden einer Aufzeichnung ist. Wenn dies der Fall ist, beendet das Audio- und/oder Videoempfangsgerät 1 in einem Schritt S38 die Aufzeichnung.

Vorzugsweise ermittelt das Audio- und/oder Videoempfangsgerät 1 im unmittelbaren Anschluss daran in einem Schritt S39 die aufgezeichneten Verwaltungsdaten VD der soeben beendeten Aufzeichnung und zeigt diese Verwaltungsdaten VD (oder korrespondierende Verwaltungsinformationen VI) in einem Schritt S40 an. Insbesondere kann wieder eine Einblendung in das über die Anzeigeeinrichtung 5 ausgegebene Bild erfolgen.

Aus den obenstehenden Erläuterungen ist ersichtlich, dass - insbesondere bei einer manuell gesteuerten Aufnahme - beim Beginnen und beim Beenden einer Aufzeichnung eines empfangenen Stromes von AV-Daten eine Einblendung der aufzuzeichnenden bzw. aufgezeichneten Verwaltungsdaten VD oder der korrespondierenden Verwaltungsinformationen VI an den Benutzer 4 erfolgen kann. Auch ist aus den Ausführungen ersichtlich, dass in dem Fall, dass ein Benutzer 4 eine Funktionalität aufrufen will, die auf Grund der Verwaltungsdaten gesperrt ist, eine entsprechende Information an den Benutzer 4 ausgegeben wird.

Prinzipiell ist es möglich - alternativ oder zusätzlich zu den Schritten S39 und S40 - einen Hinweis zu generieren und aufzuzeichnen. Dies ist jedoch nicht erforderlich, da auf Grund des Umstands, dass der Benutzer 4 den Befehl zum Beenden der Aufzeichnung direkt vorgegeben hat, eine direkte Ausgabe an den Benutzer 4 möglich ist.

Wenn im Schritt S37 nicht ein Steuerbefehl B zum Beenden einer Aufzeichnung erkannt wurde, prüft das Audio- und/oder Videoempfangsgerät 1 in einem Schritt S41, ob der eingegebene Steuerbefehl B ein Befehl zum Beginnen einer Wiedergabe eines bereits aufgezeichneten Stromes von AV-Daten ist.

Wenn dies zutrifft, prüft das Audio- und/oder Videoempfangsgerät 1 in einem Schritt S42, ob die angeforderte Aufzeichnung von AV-Daten bereits gelöscht ist. Wenn dies der Fall ist, wird in einem Schritt S43 eine entsprechende Meldung an den Benutzer 4 ausgegeben. Anderenfalls geht das Audio- und/oder Videoempfangsgerät zu Schritten S44 und S45 über.

Im Schritt S44 ermittelt das Audio- und/oder Videoempfangsgerät 1 die Verwaltungsdaten VD des aufgezeichneten Stromes von AV-Daten. Weiterhin erfolgt im Schritt S44 eine kurzzeitige Ausgabe der Verwaltungsdaten VD an den Benutzer 4, beispielsweise über die Anzeigeeinrichtung 5. Im Schritt S45 beginnt das Audio- und/oder Videoempfangsgerät 1 mit der Wiedergabe des aufgezeichneten Stromes von AV-Daten.

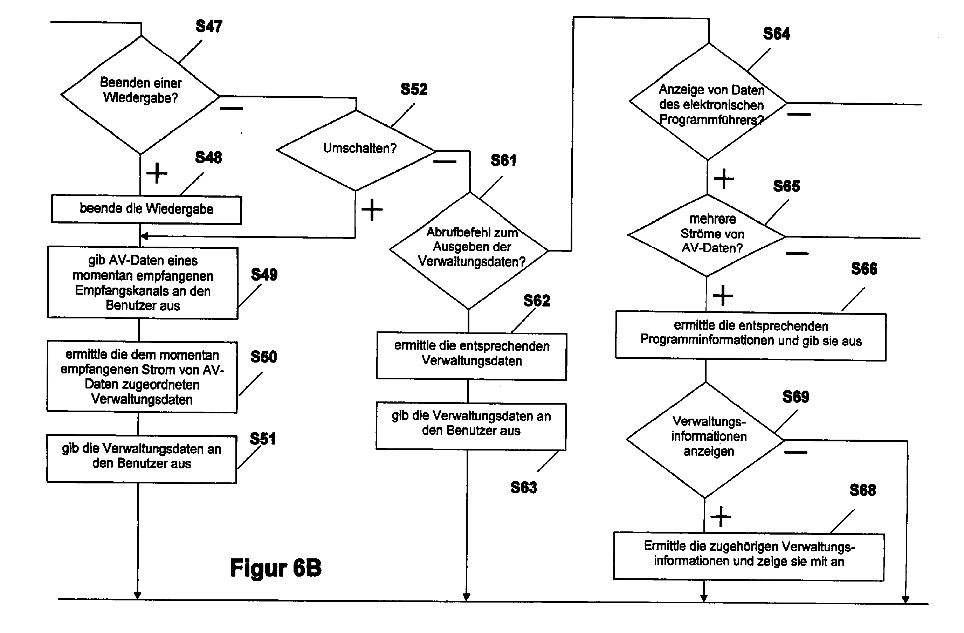

Wenn der vorgegebenen Steuerbefehl B auch nicht ein Steuerbefehl B zum Beginnen der Wiedergabe eines aufgezeichneten Stromes von AV-Daten war, geht das Audio- und/oder Videoempfangsgerät 1 zu einem Schritt S47 über (siehe Figur 6B).Im Schritt S47 prüft das Audio- und/oder Videoempfangsgerät 1, ob der eingegebene Steuerbefehl B ein Steuerbefehl zum Beenden der Wiedergabe eines aufgezeichneten Stromes von AV-Daten ist. Wenn dies der Fall ist, beendet das Audio- und/oder Videoempfangsgerät in einem Schritt S48 die Wiedergabe.

Das Beenden der Wiedergabe impliziert, dass nachfolgend die AV-Daten eines momentan empfangenen Empfangskanals über die Anzeigeeinrichtung 5 an den Benutzer 4 ausgegeben werden. Dies ist in einem Schritt S49 angedeutet. Auf Grund des Wechsels zum momentan empfangenen Empfangskanal werden jedoch zusätzlich Schritte S50 und S51 ausgeführt. Im Schritt S50 ermittelt das Audio- und/oder Videoempfangsgerät 1 die Verwaltungsdaten VD, die dem momentan empfangenen Strom von AV-Daten zugeordnet sind. Im Schritt S51 erfolgt eine kurzzeitige Ausgabe an den Benutzer 4.

Wenn der eingegebene Steuerbefehl B auch nicht ein Befehl zum Beenden der Wiedergabe eines aufgezeichneten Stromes von AV-Daten ist, prüft das Audio- und/oder Videoempfangsgerät in einem Schritt S52, ob der vorgegebene Steuerbefehl B ein Befehl zum Umschalten auf einen anderen Empfangskanal ist. Wenn dies der Fall ist, geht das Audio- und/oder Videoempfangsgerät 1 zu den bereits erläuterten Schritten S49 bis S51 über. Anderenfalls geht das Audio- und/oder Videoempfangsgerät 1 zu einem Schritt S61 über.

Aus den obenstehenden Ausführungen zu den Schritten S47 bis S52 ist ersichtlich, dass insbesondere auch in dem Fall, dass mit der Ausgabe eines empfangenen Stromes von AV-Daten begonnen wird, die Verwaltungsdaten VD (oder die korrespondierenden Verwaltungsinformationen VI) über die Anzeigeeinrichtung 5 an den Benutzer 4 ausgegeben werden.

In dem Fall, dass der Steuerbefehl B kein Umschalten auf einen anderen Empfangskanal war, prüft das Audio- und/oder Videoempfangsgerät 1 im Schritt S61, ob der eingegebene Steuerbefehl B ein Abrufbefehl des Benutzers 4 zum Ausgeben der Verwaltungsdaten VD eines momentan wiedergegebenen Stromes von AV-Daten ist. Wenn dies der Fall ist, ermittelt das Audio- und/oder Videoempfangsgerät 1 in einem Schritt S62 die entsprechenden Verwaltungsdaten VD (bzw. die korrespondierenden Verwaltungsinformationen VI) und zeigt sie in einem Schritt S63 kurzzeitig an.

Anderenfalls prüft das Audio- und/oder Videoempfangsgerät 1 in einem Schritt S64, ob Daten des elektronischen Programmführers EPG angezeigt werden sollen. Wenn dies der Fall ist, setzt das Audio- und/oder Videoempfangsgerät 1 die Ausführung des Verfahrens mit einem Schritt S65 fort.

Im Schritt S65 prüft das Audio- und/oder Videoempfangsgerät 1, ob Programminformationsdaten über mehrere Ströme von AV-Daten ausgegeben werden sollen. Bei den Strömen von AV-Daten kann es sich um gegenwärtig empfangbare Ströme von AV-Daten handeln (Stichwort "aktuelle Programmübersicht"). Alternativ kann es sich um zukünftig empfangbare Ströme von AV-Daten handeln (Stichwort "Programmvorschau"). Auch Mischformen (Stichwort "ab jetzt bis ...") sind möglich.

Wenn ein derartiger Befehl erkannt wurde, ermittelt das Audio- und/oder Videoempfangsgerät 1 in einem Schritt S66 die entsprechenden Programminformationen und gibt sie über die Anzeigeeinrichtung 5 an den Benutzer 4 aus.

Es ist möglich, dass das Audio- und/oder Videoempfangsgerät 1 stets und in jedem Fall in einem Schritt S68 auch die zugehörigen Verwaltungsinformationen VI ermittelt und mit anzeigt. Alternativ ist es möglich, zusätzlich einen Schritt S69 vorzusehen, in dem das Audio- und/oder Videoempfangsgerät 1 prüft, ob ihm vom Benutzer 4 eine entsprechende Anzeigeaufforderung vorgegeben wird.

Es wird darauf hingewiesen, dass der Begriff "elektronischer Programmführer" im Rahmen der vorliegenden Erfindung auch die Informationsdaten über bereits aufgezeichnete Ströme von AV-Daten umfasst. Es ist also beispielsweise möglich, dass die Anzeige des Schrittes S67 eine (vollständige oder teilweise) Auflistung bereits aufgezeichneter Ströme von AV-Daten ist.

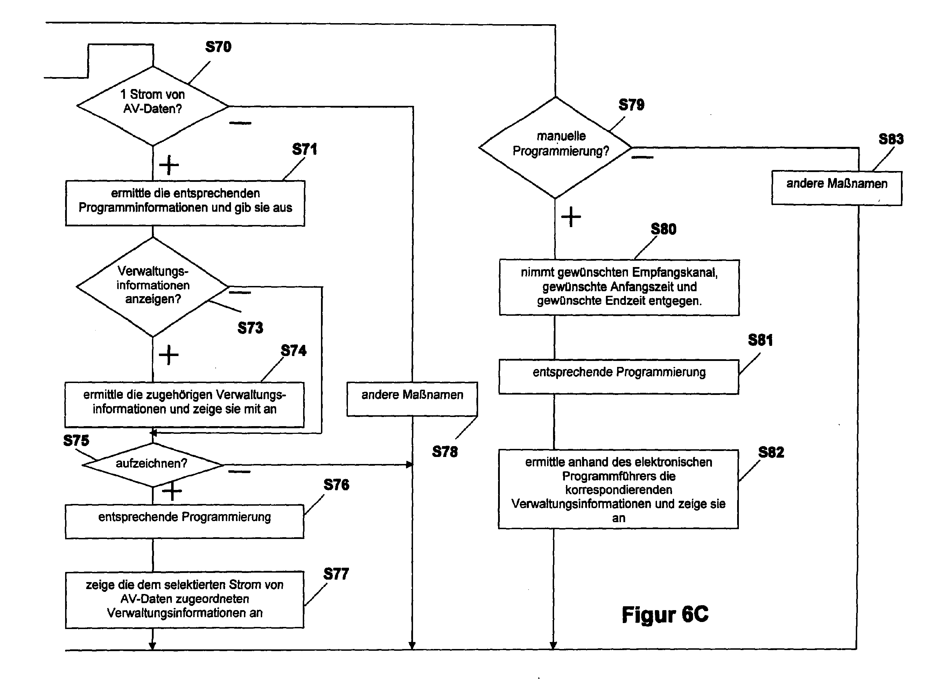

Es ist auch möglich, dass im Rahmen einer Anzeige von Programminformationsdaten nur die Daten eines einzigen gegenwärtig oder zukünftig empfangbaren Strom von AV-Daten an den Benutzer ausgibt. Ob dies der Fall ist, prüft das Audio- und/oder Videoempfangsgerät 1 gemäß Figur 6C in einem Schritt S70.

Wenn dies der Fall ist, ermittelt das Audio- und/oder Videoempfangsgerät 1 in einem Schritt S71 die zugehörigen Programminformationsdaten und zeigt sie an. In einem Schritt S73 kann weiterhin eine Anzeige der zugehörigen Verwaltungsinformationen VI erfolgen. Der Schritt S73 kann stets ausgeführt werden. Alternativ kann dem Schritt S73 ein Schritt S74 vorgeordnet sein, in dem das Audio- und/oder Videoempfangsgerät 1 prüft, ob ihm eine entsprechende Anzeigeaufforderung vom Benutzer 4 vorgegeben wurde.

Die Schritte S71 bis S74 korrespondieren inhaltlich mit den Schritten S66 bis S69. Der einzige Unterschied besteht darin, dass die Schritte S71 bis S74 auf einen einzelnen Strom von AV-Daten bezogen sind, nicht auf mehrere Ströme von AV-Daten.

Es ist möglich, dass über die Schritte S65 bis S74 keine weiteren Schritte vorhanden sind, die auf den elektronischen Programmführer EPG bezogen sind. Vorzugsweise ist es jedoch möglich, direkt aus dem elektronischen Programmführer EPG heraus dem Audio- und/oder Videoempfangsgerät 1 eine Aufzeichnungsanweisung für einen der zukünftig empfangbaren Ströme von AV-Daten vorzugeben. In einem derartigen Fall können beispielsweise Schritte S75 bis S77 vorhanden sein, die sich an die Schritte S71 bis S74 anschließen. Auch könnten entsprechende Schritte im Anschluss an die Schritte S66 bis S69 ausgeführt werden, wenn zuvor einer der in den Schritten S66 bis S69 betroffenen Ströme von AV-Daten selektiert wird.

Im Schritt S75 prüft das Audio- und/oder Videoempfangsgerät 1, ob ihm eine Aufzeichnungsanweisung für den Strom von AV-Daten, dessen Programmführerdaten gerade dargestellt werden, vorgegeben worden ist. Wenn dies der Fall ist, programmiert sich das Audio- und/oder Videoempfangsgerät 1 derart, dass es den selektierten Strom von AV-Daten aufzeichnet. Weiterhin zeigt das Audio- und/oder Videoempfangsgerät 1 in diesem Fall im Schritt S77 die dem selektierten Strom von AV-Daten zugeordneten Verwaltungsinformationen VI an.

In einem Schritt S78 werden andere Maßnahmen ergriffen, die im Rahmen der vorliegenden Erfindung nicht von Bedeutung sind.

Wie allgemein bekannt ist, ist es weiterhin möglich, zukünftige Aufzeichnungsvorgänge manuell zu programmieren. Das Audio- und/oder Videoempfangsgerät 1 prüft daher in einem Schritt S79, ob ein derartiger Programmiervorgang vorgenommen werden soll. Wenn dies der Fall ist, nimmt das Audio- und/oder Videoempfangsgerät 1 in einem Schritt S80 Identifikationsdaten für einen gewünschten Empfangskanal (beispielsweise ARD, ZDF, RTL, NDR3, ...), eine gewünschte Anfangszeit und eine gewünschte Endezeit der Aufzeichnung entgegen. In einem Schritt S81 programmiert sich das Audio- und/oder Videoempfangsgerät 1 entsprechend. In einem Schritt S82 kann das Audio- und/oder Videoempfangsgerät 1 anhand des elektronischen Programmführers EPG die korrespondierenden Verwaltungsinformationen VI ermitteln und anzeigen.

In einem Schritt S83 werden andere Maßnahmen ergriffen, die im Rahmen der vorliegenden Erfindung nicht von Bedeutung sind.

Die vorliegende Erfindung weist viele Vorteile auf. Insbesondere ermöglicht sie ein besseres Verständnis des Benutzers 4 für das, was das Audio- und/oder Videoempfangsgerät 1 tut und vor allem trotz entsprechender Befehlsvorgabe oder Programmierung nicht tut.

Die obige Beschreibung dient ausschließlich der Erläuterung der vorliegenden Erfindung. Der Schutzumfang der vorliegenden Erfindung soll hingegen ausschließlich durch die beigefügten Ansprüche bestimmt sein.

### Bezugszeichenliste

- 1: Audio- und/oder Videoempfangsgerät
- 2: Parabolantenne
- 3: Kabelanschluss
- 4: Benutzer
- 5, 10: Anzeigeeinrichtungen
- 6: Speichereinrichtung
- 7: Betriebssoftware
- 8: Datenträger
- 9: Maschinencode

- B: Steuerbefehle
- E: Empfangssignal
- EPG: Elektronischer Programmführer
- E': Einträge
- F1 bis F3: Felder
- P: Datenpakete
- PI: Paketidentifizierer
- S1 bis S83: Schritte
- VD: Verwaltungsdaten
- VI: Verwaltungsinformationen

## Patentansprüche

1. Betriebsverfahren für ein Audio- und/oder Videoempfangsgerät (1),
- wobei das Audio- und/oder Videoempfangsgerät (1) einen digitalen Strom von AV-Daten und den AV-Daten zugeordnete Verwaltungsdaten (VD) empfängt,
- wobei das Audio- und/oder Videoempfangsgerät (1) in dem Fall, dass ihm von einem Benutzer (4) des Audio- und/oder Videoempfangsgeräts (1) ein Aufzeichnungsbefehl für den empfangenen Strom von AV-Daten vorliegt, den empfangenen Strom von AV-Daten und die zugeordneten Verwaltungsdaten (VD) unter Berücksichtigung von durch die Verwaltungsdaten (VD) definierten Restriktionen aufzeichnet,
- wobei das Audio- und/oder Videoempfangsgerät (1) die aufgezeichneten Daten unter Berücksichtigung der mit aufgezeichneten Verwaltungsdaten (VD) verwaltet,
- wobei das Audio- und/oder Videoempfangsgerät (1) ein Display als Sichtanzeige enthält oder ein solches ansteuert und/oder einen Vocoder zur Sprachangabe von Informationen enthält,
**dadurch gekennzeichnet,**
**dass** das Audio- und/oder Videoempfangsgerät (1) in mindestens einem Betriebszustand die empfangenen Verwaltungsdaten (VD) und/
oder die aufgezeichneten Verwaltungsdaten (VD) und/oder in einem Eintrag (E') eines elektronischen Programmführers (EPG) über den empfangenen Strom von AV-Daten und/oder den aufgezeichneten Strom von AV-Daten enthaltene, mit den empfangenen und/oder aufgezeichneten Verwaltungsdaten (VD) korrespondierende Verwaltungsinformationen (VI) auf dem Display anzeigt und/oder über den Vokoder an den Benutzer (4) ausgibt.

2. Betriebsverfahren nach Anspruch 1, **dadurch gekennzeichnet, dass** einer der Betriebszustände, in denen das Audio- und/oder Videoempfangsgerät (1) die empfangenen Verwaltungsdaten (VD) und/oder die korrespondierenden Verwaltungsinformationen (VI) anzeigt oder an den Benutzer (4) ausgibt, der Beginn einer Aufzeichnung des empfangenen Stromes von AV-Daten ist.

3. Betriebsverfahren nach Anspruch 1 oder 2, **dadurch gekennzeichnet, dass** einer der Betriebszustände, in denen das Audio- und/oder Videoempfangsgerät (1) die empfangenen Verwaltungsdaten (VD) und/oder die korrespondierenden Verwaltungsinformationen (VI) an den Benutzer (4) ausgibt, der Beginn einer Ausgabe des empfangenen Stromes von AV-Daten ist und/oder dass das Ende einer Aufzeichnung des empfangenen Stromes von AV-Daten oder der Beginn einer Wiedergabe eines aufgezeichneten Stromes von AV-Daten ist und/oder die zulässige Aufzeichnungsdauer ist.

4. Betriebsverfahren nach einem der vorhergehenden Ansprüche, **dadurch gekennzeichnet, dass** einer der Betriebszustände, in denen das Audio- und/oder Videoempfangsgerät (1) die Verwaltungsdaten (VD) und/oder die korrespondierenden Verwaltungsinformationen (VI) an den Benutzer (4) ausgibt, ein Abrufbefehl des Benutzers (4) zum Ausgeben der Verwaltungsdaten (VD) eines über eine Anzeigeeinrichtung (5) momentan wiedergegebenen Stromes von AV-Daten ist.

5. Betriebsverfahren nach einem der vorhergehenden Ansprüche, **dadurch gekennzeichnet, dass** aufgrund der durch die Verwaltungsdaten (VD) definierten Restriktionen in Bezug auf den zugeordneten Strom von AV-Daten mindestens eine Funktionalität des Audio- und/oder Videoempfangsgeräts (1) gesperrt ist und dass einer der Betriebszustände, in denen das Audio- und/oder Videoempfangsgerät (1) die Verwaltungsdaten (VD) und/oder die korrespondierenden Verwaltungsinformationen (VI) an den Benutzer (4) ausgibt, ein Aufrufbefehl des Benutzers (4) für die in Bezug auf den zugeordneten Strom von AV-Daten gesperrte Funktionalität des Audio- und/oder Videoempfangsgeräts (1) ist.

6. Betriebsverfahren nach Anspruch 5, **dadurch gekennzeichnet, dass** die gesperrte Funktionalität ein Aufzeichnungsvorgang für den zugeordneten Strom von AV-Daten ist und dass das Audio- und/oder Videoempfangsgerät (1) trotz der Sperrung die zugeordneten Verwaltungsdaten (VD) und Identifikationsdaten (PI) für den aufzuzeichnenden Strom von AV-Daten und/oder anstelle des aufzuzeichnenden Stromes von AV-Daten eine Hinweismeldung auf die Sperrung aufzeichnet.

7. Betriebsverfahren nach einem der obigen Ansprüche, **dadurch gekennzeichnet, dass** die Verwaltungsdaten (VD) ein Zeitlimit für die Aufzeichnung des zugeordneten Stromes von AV-Daten definieren, dass das Audio- und/oder Videoempfangsgerät (1) bei Erreichen des Zeitlimits den zugeordneten Strom von AV-Daten automatisch löscht und dass das Audio- und/oder Videoempfangsgerät (1) auch nach dem Löschen des zugeordneten Stromes von AV-Daten die Aufzeichnung der zugeordneten Verwaltungsdaten (VD) und von Identifikationsdaten (PI) für den gelöschten Strom von AV-Daten beibehält und/oder eine Hinweismeldung auf die Löschung generiert.

8. Betriebsverfahren nach einem der obigen Ansprüche, **dadurch gekennzeichnet, dass** das Audio- und/oder Videoempfangsgerät (1) Einträge (E') eines elektronischen Programmführers (EPG) über gegenwärtig und/oder zukünftig empfangbare Ströme von AV-Daten empfängt, dass die Einträge (E') Verwaltungsinformationen (VI) über deren erwartete Verwaltungsdaten (VD) umfassen und dass das Audio- und/oder Videoempfangsgerät (1) die Verwaltungsinformationen (VI) gegenwärtig und/oder zukünftig empfangbarer Ströme von AV-Daten in mindestens einem Betriebszustand an den Benutzer (4) ausgibt.

9. Betriebsverfahren nach Anspruch 8, **dadurch gekennzeichnet, dass** einer der Betriebszustände, in denen das Audio- und/oder Videoempfangsgerät (1) die Verwaltungsinformationen (VI) gegenwärtig und/oder zukünftig empfangbarer Ströme von AV-Daten an den Benutzer (4) ausgibt, das Vorgeben einer Aufzeichnungsanweisung für einen der gegenwärtig und/oder zukünftig empfangbaren Ströme von AV-Daten durch den Benutzer (4) ist.

10. Betriebsverfahren nach Anspruch 9, **dadurch gekennzeichnet, dass** dem Audio- und/oder Videoempfangsgerät (1) im Rahmen der Aufzeichnungsanweisung vom Benutzer (4) nur Identifikationsdaten für einen Empfangskanal, eine gewünschte Anfangszeit und eine gewünschte Endezeit der Aufzeichnung vorgegeben werden.

11. Betriebsverfahren nach Anspruch 8, 9 oder 10, **dadurch gekennzeichnet, dass** einer der Betriebszustände, in denen das Audio- und/oder Videoempfangsgerät (1) die Verwaltungsinformationen (VI) gegenwärtig und/oder zukünftig empfangbarer Ströme von AV-Daten an den Benutzer (4) ausgibt, eine Übersichtsdarstellung ist, in der das Audio- und/oder Videoempfangsgerät (1) simultan Programminformationsdaten über mehrere gegenwärtig und/oder zukünftig empfangbare Ströme von AV-Daten an den Benutzer (4) ausgibt.

12. Betriebsverfahren nach einem der Ansprüche 8 bis 11, **dadurch gekennzeichnet, dass** einer der Betriebszustände, in denen das Audio- und/oder Videoempfangsgerät (1) die Verwaltungsinformationen (VI) gegenwärtig und/oder zukünftig empfangbarer Ströme von AV-Daten an den Benutzer (4) ausgibt, eine Einzeldarstellung ist, in der das Audio- und/oder Videoempfangsgerät (1) Programminformationsdaten über einen einzigen gegenwärtig oder zukünftig empfangbaren Strom von AV-Daten an den Benutzer (4) ausgibt.

13. Betriebsverfahren nach einem der Ansprüche 1, 8 bis 12, **dadurch gekennzeichnet, dass** die Verwaltungsdaten (VD), die Verwaltungsinformationen (VI) zum Klassifizieren in Kategorien und zur Sortierung sowie zur Anzeige von zugeordneten EPG-Daten empfangener AV-Daten dienen und die EPG-Daten nach Vorgabe eines Verwaltungsdatums oder einer Verwaltungsinformation geordnet auf dem Display dargestellt und/oder an den Vocoder ausgegeben werden.

14. Betriebsverfahren nach einem der vorhergehenden Ansprüche, **dadurch gekennzeichnet, dass** das Audio- und/oder Videoempfangsgerät (1) einen Sprachsynthesizer aufweist und dass die Darstellung auf dem Display und/oder die Ausgabe an den Vocoder durch Spracheingabe und/oder durch Auswahl mittels Cursor auf dem Display erfolgt.
